# EUROPÄISCHE PATENTSCHRIFT

(11) **EP 4 035 865 B1**
(45) Veröffentlichungstag und Bekanntmachung des Hinweises auf die Patenterteilung: **15.03.2023**
(21) Anmeldenummer: 21154820.1
(22) Anmeldetag: 02.02.2021
(51) Int. Cl.: B29C 45/18, B65G 65/42

(54) **DOSIERVORRICHTUNG FÜR ADDITIVE UND DOSIERVERFAHREN FÜR ADDITIVE**
METERING DEVICE AND METHOD FOR ADDITIVES
DISPOSITIF ET PROCÉDÉ DE DOSAGE POUR ADDITIFS

(43) Veröffentlichungstag der Anmeldung: 03.08.2022
(73) Patentinhaber: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(56) Entgegenhaltungen:
- EP-A1- 1 332 793
- EP-A2- 1 151 845
- WO-A1-2013/011706
- WO-A2-02/085771
- DE-A1- 2 144 552
- DE-A1- 2 349 756
- DE-A1-102007 050 739
- FR-A- 1 539 862

## Beschreibung

Dier Erfindung betrifft eine Vorrichtung zur Dosierung von granuliertem oder pulverförmigen Additiven in die Plastifiziereinheit einer Kunststoffspritzmaschine nach dem Oberbegriff des Patentanspruchs 1. Die Erfindung betrifft weiterhin ein Verfahren zur dosierten Zuführung eines Additivs in die Plastifiziereinheit einer Kunststoffspritzgießmaschine nach dem Patentanspruch 9.

Zu direkten dosierten Zugabe von Additiven wie beispielsweise Färbemitteln in ein Kunststoffmaterial, das einem Plastifizierzylinder (bei Extrudern auch als Extrusionszylinder bezeichnet) einer Kunststoffverarbeitungsmaschine, insbesondere einer Kunststoffspritzgießmaschine zugeführt wird, sind Dosiergeräte bekannt, die einen Aufgabetrichter aufweisen, der oftmals auch als Aufgabebehälter ausgebildet ist, über den das Additiv auf eine oder mehrere in dem Gerätegehäuse angeordnete, über einen Antrieb angetriebene Förderschnecke aufgegeben wird. Eine solche Dosiervorrichtung ist beispielsweise aus der DE 103 42 822 B4 bekannt. Problematisch bei solchen Dosiervorrichtungen ist die Ungenauigkeit der Dosierung. Insbesondere bei kleinen Schussgewichten, die eine geringe Dosis von einzelnen Körnern eines Färbemittels benötigen, ist die Genauigkeit der Dosierung solcher Systeme unzureichend, da durch Vibrationen oder auch statische Aufladungen der Farbkörner einzelne Farbkörner in benachbarte Dosen wandern können, wodurch unterschiedliche Dosen gebildet sind. Dies führt zu Farbabweichungen im Produktionsprozess. Das Schussgewicht bezeichnet das in einem Produktionszyklus verbrauchte Material.

Zur genaueren, gleichmäßigen Dosierung ist in der WO 2018/038601 A1 eine Dosiervorrichtung beschrieben, die Saugkanäle zur Entnahme einzelner Partikel aufweist, über die eine Dosierung positioniert wird, die sodann über einen angeordneten Sensor erfasst wird und mit der geforderten Menge verglichen wird, wobei im Falle einer Abweichung die Menge korrigiert wird und bei Übereinstimmung die Portion über einen Auslass ausgegeben wird. Nachteilig an der vorbekannten Dosiervorrichtung ist, dass diese komplex aufgebaut und aufwendig herzustellen ist. Weitere Verfahren und Vorrichtungen zur Dosierung von pulver- oder körnerförmigem Material sind in der EP1332793A1 und der FR1539862A beschrieben.

Hier will die Erfindung Abhilfe schaffen. Der Erfindung liegt die Aufgabe zugrunde, eine Vorrichtung zur Dosierung von granuliertem oder pulverförmigen Additiven in den Plastifizierzylinder einer Kunststoffspritzmaschine bereitzustellen, die eine genaue, zuverlässige Dosierung ermöglicht und die einfach aufgebaut und kostengünstig herstellbar ist. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur Dosierung von granuliertem oder pulverförmigen Additiven in den Plastifizierzylinder einer Kunststoffspritzmaschine bereitgestellt, die eine genaue, zuverlässige Dosierung ermöglicht und die einfach aufgebaut und kostengünstig herstellbar ist. Dadurch, dass das Fördermittel wenigstens zwei beabstandet zueinander angeordnete, rotierbar gelagerte Wellen umfasst, von denen wenigstens eine Welle mit einem Antrieb verbunden ist, über den sie rotierbar ist, sowie einen Förderriemen, der auf die wenigstens zwei Wellen aufgespannt ist und der auf seiner den Wellen abgewandten Seite mit regelmäßig angeordneten Fächern gleicher Größe versehen ist, ist eine gleichmäßige Portionierung der erforderlichen Dosen in die einzelnen Fächer erzielt, die über den umlaufenden Förderriemen über den Einfüllstutzen in einen Plastifizierzylinder förderbar sind. Durch die ebene Förderung der Dosen in den einzelnen Fächern ist einem Überspringen einzelner Körner beispielsweise aufgrund von Vibrationen entgegengewirkt. Auch eine statische Aufladung der Körner ist hierdurch vermieden, da kaum eine Bewegung der Körner während der Förderung erfolgt.

Die folgenden Ausführungen beziehen sich gleichermaßen auf Spritzgießvorrichtungen und Extruder. Wenngleich im Folgenden lediglich eine Spritzgießvorrichtung und die Dosierung von Additiven in den Plastifizierzylinder einer Spritzgießvorrichtung thematisiert ist, so ist hierunter gleichermaßen die Dosierung von Additiven in Extrusionszylinder eines Extruders zu subsummieren.

Der Förderriemen ist entweder mit regelmäßig beabstandet angeordneten Zähnen versehen, zwischen denen die Fächer gebildet sind. Hierdurch sind gleichmäßige Kammern gebildet, durch deren winklig zulaufende Flanken einer Bewegung der Körner weiter entgegengewirkt ist. Oder der Förderriemen ist mit regelmäßig beabstandet angeordneten Mulden versehen, welche die Fächer bilden.

In Ausgestaltung der Erfindung ist der Förderriemen auf seiner den Wellen zugewandten Seiten mit Erhebungen versehen, die mit auf den Wellen oder in auf den Wellen angeordneten Riemenscheiben eingebrachten Vertiefungen, in die sie eingreifen, korrespondieren. Hierdurch ist ein Durchrutschen des angetriebenen Förderriemens verhindert, wodurch einem Überspringen von Körnern weiter entgegengewirkt ist. Bevorzugt sind die Erhebungen durch eine Verzahnung gebildet. In diesem Falle kann als Förderriemen ein handelsüblicher Doppelzahnriemen eingesetzt werden, der als Standardbauteil kostengünstig zu beziehen ist. Alternativ können die Erhebungen auch durch eine Noppenanordnung gebildet sein.

In weiterer Ausgestaltung der Erfindung ist der Förderriemen zwischen zwei parallel zueinander angeordneten Seitenwänden geführt, die sich bis zu dem Einfüllstutzen erstrecken. Hierdurch ist ein seitliches Wandern der in den Fächern befindlichen Additivkörner verhindert. Bevorzugt sind die beiden Seitenwände über ein Bodenteil verbunden, das zwischen zwei Wellen angeordnet ist.

In Weiterbildung der Erfindung weist der Einfüllstutzen einen Anschlussflansch zur Montage an einem Plastifizierzylindergehäuse auf. Hierdurch ist eine einfache Montage der Dosiervorrichtung an einem Plastifizierzylindergehäuse ermöglicht. Alternativ kann der Anschlussflansch auch zur Montage an einem Zulaufrohr des Einfülltrichters für das Kunststoffgranulat ausgebildet sein.

Gegenstand der Erfindung ist weiterhin eine Spritzgießvorrichtung oder ein Extruder zur Herstellung von Kunststoffprodukten nach dem Patentanspruch 7.

Der Erfindung liegt weiterhin die Aufgabe zugrunde, ein Verfahren zur dosierten Zuführung eines Additivs in den Plastifizierzylinder einer Kunststoffspritzgießmaschine (bzw. in den Extrusionszylinder eines Extruders) bereitzustellen, das eine genaue, zuverlässige Dosierung ermöglicht und darüber hinaus einfach und kostengünstig durchführbar ist. Gemäß der Erfindung wird die Aufgabe durch ein Verfahren mit den Merkmalen des Patentanspruchs 9 gelöst. Dadurch, dass das ein granulat- oder pulverförmiges Additiv über einen Trichter dosiert Fächern eines über wenigstens zwei rotierende Wellen umlaufenden Förderriemens aufgegeben werden, über den das Additiv in den Plastifizierzylinder gefördert wird, ist eine gleichmäßige Portionierung der erforderlichen Dosen in die einzelnen Fächer erzielt, die über den umlaufenden Förderriemen über den Einfüllstutzen in den Plastifizierzylinder gefördert werden. Durch die ebene Förderung der Portionen in den einzelnen Fächern ist einem Überspringen einzelner Körner beispielsweise aufgrund von Vibrationen entgegengewirkt. Bevorzugt sind die Fächer des Förderriemens durch Zähne gebildet, die auf der Außenseite eines Doppelzahnriemens angeordnet sind.

In Weiterbildung der Erfindung ist das Additiv ein Färbemittel, Hierdurch ist eine gleichmäßige Einfärbung von geringen Schussgewichten erzielt, wodurch Farbabweichungen einzelner Produkte einer Produktion vermieden sind.

Andere Weiterbildungen und Ausgestaltungen der Erfindung sind in den übrigen Unteransprüchen angegeben. Ein Ausführungsbeispiel ist in der Zeichnung dargestellt und wird nachfolgend im Einzelnen beschrieben. Es zeigen
- Figur 1: die schematische Darstellung eine Plastifizierzylinders mit Dosiervorrichtung;
- Figur 2: die Darstellung der Dosiervorrichtung aus Figur 1 und
- Figur 3: die Detaildarstellung des Ausschnitts A aus Figur 2.

Die als Ausführungsbeispiel gewählte Dosiervorrichtung 1 besteht im Wesentlichen aus einem Gehäuse 2, in dem zwei Wellen 3 drehbar gelagert sind, die mit Zahnriemenscheiben 31 versehen sind, auf die ein Förderriemen 4 aufgespannt ist, wobei eine der Wellen 3 über einen - nicht dargestellten - Elektromotor antreibbar ist. Der Elektromotor ist mit einer - nicht dargestellten - Steuerung verbunden, über die der Antrieb der Wellen 3 über den Elektromotor entsprechend der erforderlichen Dosierung steuerbar ist. Die Steuerung kann hierbei entsprechend der Steuerung eine Dosiervorrichtung mit Förderschnecke nach dem Stand der Technik ausgeführt sein.

Das Gehäuse 2 ist im Wesentlichen quaderförmig ausgebildet und weist einen Aufgabetrichter 21 auf, der oberhalb einer ersten Welle 3 in dem Gehäuse 2 mündet. Weiterhin sind in dem Gehäuse beidseitig des auf den Wellen 3 aufgespannten Förderriemens 4 parallel zueinander zwei Seitenwände 22 angeordnet, die zwischen den beiden Wellen 3 über ein Bodenteil 23 verbunden sind. An seiner dem Aufgabetrichter 1 abgewandten Seite ist an dem Gehäuse 2 ein Einfüllstutzen angeordnet, der in Form eines rohrförmigen Anschlussflansches 24 ausgebildet ist. Die zweite der Wellen 3 ist derart in dem Gehäuse 2 positioniert, dass sie etwa hälftig in den Anschlussflansch 24 hineinragt, sodass die nicht auf einer Ebene befindlichen Fächer 42 des Förderriemens 4 innerhalb des rohrförmigen Anschlussflansches 24 positioniert sind.

Der Förderriemen 4 ist im Ausführungsbeispiel als Doppelzahnriemen ausgeführt und weist auf seiner Außenseite in regelmäßigen Abständen zueinander angeordnete Zähne 41 auf, zwischen denen Fächer 42 begrenzt sind. Auf seiner Innenseite ist der Förderriemen 4 mit einer Innenverzahnung 43 versehen, die in die Außenverzahnungen der auf den Wellen 3 aufgebrachten Zahnriemenscheiben 31 eingreifen.

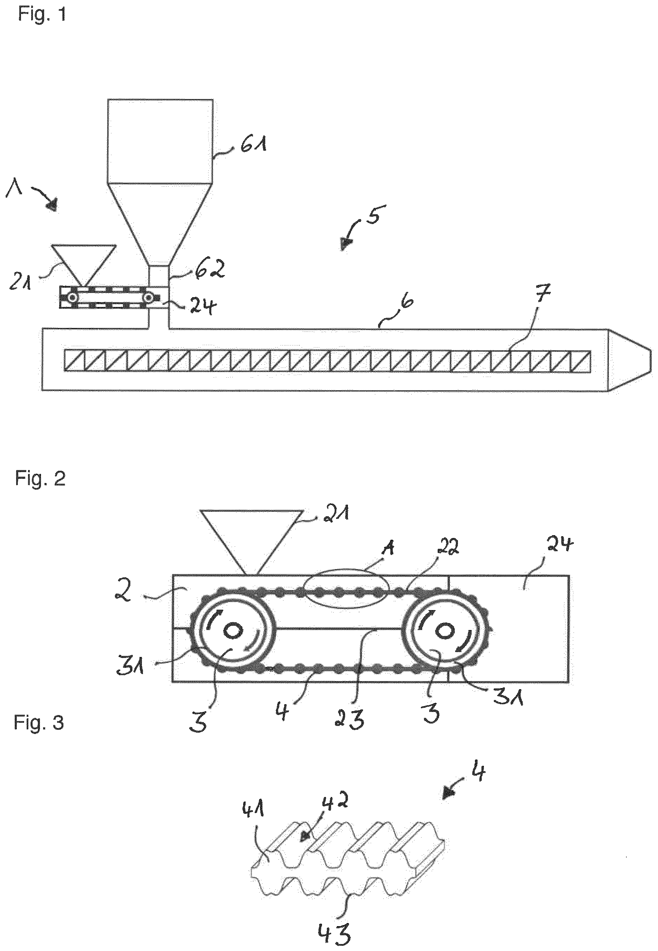

In Figur 1 ist schematisch die Plastifiziereinheit 5 einer als solche allgemein bekannten Kunststoffspritzgießmaschine skizziert. Der Plastifiziereinheit 5 weist in bekannter Art und Weise einen beheizbaren Plastifizierzylinder 6 auf, in dem eine Schnecke 7 über einen - nicht dargestellten - Antriebsmotor um ihre Längsachse zyklisch rotierbar ist. An den Plastifizierzylinder 6 ist ein Einfülltrichter 61 angeordnet, der in ein Zulaufrohr 62 übergeht, über das der Einfülltrichter 61 mit dem Plastifizierzylinder 6 verbunden ist, in dem das Zulaufrohr 62 mündet. An dem Zulaufrohr 62 ist der als Einfüllstutzen fungierende Anschlussflansch 24 der Dosiervorrichtung 1 montiert, sodass die dem Anschlussflansch 24 zugewandte Welle 3 nahezu hälftig innerhalb des Zulaufrohres 62 positioniert ist.

Zur Einfärbung des der Plastifiziereinheit 5 durch das Zulaufrohr 62 zugeführtem Schussgewichts an Kunststoffgranulat wird diesem über die Dosiervorrichtung 1 eine definierte Menge an körnigem Färbemittel zugegeben. Hierbei wird das Färbemittel über den Aufgabetrichter 21 auf ein oder mehrere Fächer 42 des Förderriemens 4 aufgegeben, die durch Rotation der Wellen 3 in Richtung Anschlussflansch 42 bewegt werden. Dabei wird das Färbemittel auf dem Förderriemen 4 auf einer Ebene gefördert, bis es beim Umlauf des entsprechendes Fachs 42 um die in dem Anschlussflansch 24 hineinragende Welle 3 in das Zulaufrohr (62) aufgegeben wird. Zur Dosierung von kleineren oder größeren Mengen kann der Förderriemen 4 einfach und schnell durch einen Förderriemen mit größeren oder kleineren Fächern (42) ersetzt werden.

## Patentansprüche

1. Vorrichtung zur Dosierung von granuliertem oder pulverförmigen Additiven in die Plastifiziereinheit (5) einer Kunststoffspritzmaschine, umfassend einen Aufgabetrichter (21), der über ein Fördermittel mit einem Einfüllstutzen verbunden ist, wobei das Fördermittel wenigstens zwei beabstandet zueinander angeordnete, rotierbar gelagerte Wellen (3) umfasst, von denen wenigstens eine Welle (3) mit einem Antrieb verbunden ist, über den sie rotierbar ist, sowie einen Förderriemen (4), der auf die wenigstens zwei Wellen (3) aufgespannt ist und der auf seiner den Wellen (3) abgewandten Seite mit regelmäßig angeordneten Fächern (42) gleicher Größe versehen ist, **dadurch gekennzeichnet, dass** der Förderriemen (4) mit regelmäßig beabstandet angeordneten Zähnen (41) versehen ist, zwischen denen die Fächer (42) gebildet sind oder mit regelmäßig beabstandet angeordneten Mulden versehen ist, welche die Fächer bilden.

2. Vorrichtung nach Anspruch 1, **dadurch gekennzeichnet, dass** der Förderriemen (4) auf seiner den Wellen (3) zugewandten Seiten mit Erhebungen versehen ist, die mit auf den Wellen (3) oder in auf den Wellen (3) angeordneten Riemenscheiben eingebrachten Vertiefungen, in die sie eingreifen, korrespondieren.

3. Vorrichtung nach Anspruch 2, **dadurch gekennzeichnet, dass** die Erhebungen durch eine Innenverzahnung (43) oder eine Noppenanordnung gebildet ist.

4. Vorrichtung nach einem der vorgenannten Ansprüche, **dadurch gekennzeichnet, dass** der Förderriemen (4) zwischen zwei parallel zueinander angeordneten Seitenwänden (22) geführt ist, die sich bis zu dem Einfüllstutzen erstrecken.

5. Vorrichtung nach Anspruch 4, **dadurch gekennzeichnet, dass** die beiden Seitenwände (22) über ein Bodenteil (23) verbunden sind, das zwischen zwei Wellen (3) angeordnet ist.

6. Vorrichtung nach einem der vorgenannten Ansprüche, **dadurch gekennzeichnet, dass** der Einfüllstutzen einen Anschlussflansch (24) zur Montage an einem Extrudergehäuse (6) oder einem Zulaufrohr (62) aufweist.

7. Spritzgießvorrichtung zur Herstellung von Kunststoffprodukten, mit einem Plastifizierzylinder (6) und wenigstens einer in diesem um ihre Längsachse drehbar gelagerten Schnecke (7), die mit einem Antrieb verbunden ist, über den sie kontinuierlich oder zyklisch rotierbar ist, wobei ein Einfülltrichter (61) zur Aufgabe von Kunststoffgranulat sowie wenigstens eine Dosiereinrichtung (1) für Additive angeordnet sind, die in dem Plastifizierzylinder (6) münden, **dadurch gekennzeichnet, dass** wenigstens eine der angeordneten Dosiervorrichtungen für Additive eine Dosiervorrichtung (1) nach einem der vorgenannten Ansprüche ist.

8. Spritzgießvorrichtung nach Anspruch 7, **dadurch gekennzeichnet, dass** der Einfüllstutzen der Dosiereinrichtung (1) in einem an dem Einfülltrichter (61) angeordneten Zulaufrohr (62) mündet, über das der Einfülltrichter (61) mit dem Plastifizierzylinder (6) verbunden ist.

9. Verfahren zur dosierten Zuführung eines Additivs in die Plastifiziereinheit einer Kunststoffspritzgießmaschine, insbesondere mit einer Dosiereinrichtung nach einem der Ansprüche 1 bis 6, wobei ein granulat- oder pulverförmiges Additiv über einen Aufgabetrichter (21) Fächern (42) eines über wenigstens zwei rotierende Wellen umlaufenden Förderriemens (4) aufgegeben werden, über den das Additiv in den Extruder (5) gefördert wird.

10. Verfahren nach Anspruch 9, **dadurch gekennzeichnet, dass** das Additiv ein Färbemittel ist.

11. Verfahren nach Anspruch 9 oder 10, **dadurch gekennzeichnet, dass** die Fächer (42) des Förderriemens (4) durch Zähne (41) begrenzt sind, die auf der Außenseite eines Doppelzahnriemens angeordnet sind.

## Claims

1. Device for metering granulated or powdered additives into the plasticising unit (5) of a plastics injection moulding machine, comprising a feed hopper (21), which is connected to a filler neck via a conveying means, wherein the conveying means comprises at least two rotatably mounted shafts (3) arranged at a distance from one another, at least one shaft (3) of which is connected to a drive, by means of which it is rotatable, as well as a conveyor belt (4), which is clamped onto the at least two shafts (3) and which is provided, on its side facing away from the shafts (3), with regularly arranged compartments (42) of equal size, **characterised in that** the conveyor belt (4) is provided with regularly spaced teeth (41), between which the compartments (42) are formed or is provided with regularly spaced troughs, which form the compartments.

2. Device according to claim 1, **characterised in that** the conveyor belt (4) is provided, on its sides facing the shafts (3), with elevations corresponding to depressions introduced on the shafts (3) or in pulleys arranged on the shafts (3), in which they engage.

3. Device according to claim 2, **characterised in that** the elevations are formed by an internal toothing (43) or a knob arrangement.

4. Device according to one of the previous claims, **characterised in that** the conveyor belt (4) is guided between two side walls (22) arranged parallel to one another, which extend up to the filler neck.

5. Device according to claim 4, **characterised in that** the two side walls (22) are connected via a bottom part (23), which is arranged between two shafts (3).

6. Device according to one of the previous claims, **characterised in that** the filler neck has a connecting flange (24) for mounting on an extruder housing (6) or an inlet pipe (62).

7. Injection moulding device for producing plastic products having a plasticising cylinder (6) and at least one screw (7), which is mounted in the latter so as to be rotatable about its longitudinal axis, which is connected to a drive, by means of which it can be rotated continuously or cyclically, wherein a hopper (61) for feeding plastic granulate and at least one metering device (1) for additives are arranged, which open into the plasticising cylinder (6), **characterised in that** at least one of the arranged metering devices for additives is a metering device (1) according to one of the previous claims.

8. Injection moulding device according to claim 7, **characterised in that** the filler neck of the metering device (1) opens into an inlet pipe (62) arranged on the hopper (61), via which the hopper (61) is connected to the plasticising cylinder (6).

9. Method for the metered feeding of an additive into the plasticising unit of a plastics injection moulding machine, in particular with a metering device according to one of the claims 1 to 6, wherein a granular or powdery additive is fed via a feed hopper (21) to compartments (42) of a conveyor belt (4) rotating over at least two rotating shafts, via which the additive is conveyed into the extruder (5).

10. Method according to claim 9, **characterised in that** the additive is a colouring agent.

11. Method according to claim 9 or 10, **characterised in that** the compartments (42) of the conveyor belt (4) are delimited by teeth (41), which are arranged on the outside of a double-toothed belt.

## Revendications

1. Dispositif pour le dosage d'additifs granulés ou pulvérulents dans l'unité de plastification (5) d'une presse à injecter les plastiques, comprenant un entonnoir d'alimentation (21) relié via un moyen de convoyage à un ajutoir de remplissage, sachant que le moyen de convoyage comprend au moins deux arbres (3) en appui rotatif disposés à distance l'un de l'autre, arbres dont au moins un (3) est relié à un entraînement lui permettant de tourner, et qu'il comprend une tapis convoyeur (4) tendu entre au moins les deux arbres (3) et qui sur son côté ne regardant pas les arbres (3) est muni de compartiments (42) régulièrement espacés et de même taille, **caractérisé en ce que** le tapis convoyeur (4) est muni de dents (41) régulièrement espacées, entre lesquelles sont formés les compartiments (42), ou qu'il est muni d'auges régulièrement espacées formant les compartiments.

2. Dispositif selon la revendication 1, **caractérisé en ce que** le tapis convoyeur (4) est muni, sur son côté regardant les arbres (3), de bossages épousant des creux - dans lesquels ils engrènent - ménagés sur les arbres (3) ou ménagés dans des poulies disposées sur les arbres (3).

3. Dispositif selon la revendication 2, **caractérisé en ce que** les bossages sont formés par une denture interne (43) ou par un agencement d'excroissances.

4. Dispositif selon l'une des revendications précédentes, **caractérisé en ce que** le tapis convoyeur (4) est guidé entre deux parois latérales (22) disposées réciproquement parallèles, qui s'étendent jusqu'à l'ajutoir de remplissage.

5. Dispositif selon la revendication 4, **caractérisé en ce que** les deux parois latérales (22) sont reliées via une pièce de fond (23) disposée entre deux arbres (3).

6. Dispositif selon l'une des revendications précédentes, **caractérisé en ce que** l'ajutoir de remplissage présente une bride de raccordement (24) permettant le montage contre un carter (6) d'extrudeuse ou un tuyau d'amenée (62).

7. Dispositif de moulage par injection, pour la fabrication de produits en matière plastique, comprenant un cylindre de plastification (6) et, dans le cylindre, au moins une vis sans fin (7) en appui lui permettant de tourner sur son axe longitudinal, vis qui est reliée à un entraînement lui permettant de tourner continuellement ou de façon cyclique, sachant que sont disposés une trémie de remplissage (61) servant à alimenter en plastique granulé, ainsi qu'au moins un dispositif de dosage (1) des additifs, matériaux qui aboutissent dans le cylindre de plastification (6), **caractérisé en ce qu'**au moins l'un des dispositifs présents servant au dosage des additifs est un dispositif de dosage (1) selon l'une des revendications précédentes.

8. Dispositif de moulage par injection selon la revendication 7, **caractérisé en ce que** l'ajutoir de remplissage du dispositif de dosage (1) aboutit dans un tuyau d'amenée (62) disposé contre la trémie de remplissage (61), tuyau via lequel la trémie de remplissage (61) est reliée avec le cylindre de plastification (6).

9. Procédé d'amenée dosée d'un additif dans l'unité de plastification d'une presse à injecter et mouler le plastique, comprenant en particulier un dispositif de dosage selon l'une des revendications 1 à 6, sachant qu'un additif granulé ou pulvérulent est chargé via un entonnoir d'alimentation (21) dans les compartiments (42) d'un tapis convoyeur (4) circulant en circuit fermé via au moins deux arbres rotatifs, tapis via lequel l'additif est convoyé jusque dans l'extrudeuse (5).

10. Procédé selon la revendication 9, **caractérisé en ce que** l'additif est un colorant.

11. Procédé selon la revendication 9 ou 10, **caractérisé en ce que** les compartiments (42) du tapis convoyeur (4) sont délimités par des dents (41) disposées sur le côté extérieur d'un tapis convoyeur à double denture.
